# EUROPEAN PATENT APPLICATION

(11) **EP 1 749 795 A2**
(43) Date of publication of application: **07.02.2007**
(21) Application number: 06015023.2
(22) Date of filing: 19.07.2006
(51) Int. Cl.: C01B 3/02, H01M 8/04, F17C 7/00

(54) **Hydrogen distribution networks and related methods**

(30) Priority: 25.07.2005 US 188381
(71) Applicant: Air Products and Chemicals, Inc., Allentown PA 18195-1510 (US)
(72) Inventor: Repasky, John Michael, Allentown, PA 18104 (US); Copeman, Tama Maya, Emmaus, PA 18049 (US); Pham, Hoanh Nang, Allentown, PA 18104 (US); Miller, Robert Norman, Allentown, PA 18103 (US)
(74) Representative: Schwabe - Sandmair - Marx

(57) **Abstract**

A hydrogen distribution network comprising a hydrocarbon feedstock distribution system (8); a hydrogen distribution system (12); and (c) two or more hydrogen production facilities (1-6) wherein (1) the hydrogen production facilities produce minimal or no net excess steam for export and comprise at least one hydrogen production module interconnected to a purification system, (2) the at least one hydrogen production module (a) is configured to receive hydrocarbon feedstock (7,9) from the hydrocarbon feedstock distribution system (b) reacts the hydrocarbon feedstock chemically to produce (i) a hydrogen-containing product gas, and (ii) minimal or no net excess steam for export; (c) is configured for optional interconnection to one or more additional hydrogen production modules; and (d) is configured to export the hydrogen-containing product gas to a purification system; and (3) the purification system is configured to purify the hydrogen-containing product gas and to export purified hydrogen-containing product gas to the hydrogen distribution system.

## Description

### BACKGROUND OF THE INVENTION

The "Hydrogen Economy" is expected to grow continuously and hydrogen may eventually supplant fossil fuels as a primary energy source for many applications. Numerous hydrogen applications are being developed, including hydrogen-powered fuel cell or internal combustion vehicles, stationary power applications, backup power units, power grid management, power for remote locations, and portable power applications in consumer electronics, business machinery, and recreational equipment. However, a significant expansion of the Hydrogen Economy will require marked improvements in existing hydrogen production technologies and distribution networks. Improving these networks is particularly problematic.

Because of high initial infrastructure costs and uncertainty regarding demand, it is uneconomical presently to establish hydrogen distribution networks of a breadth sufficient to service key consumers such as vehicular hydrogen fuel stations and hydrogen-powered fuel cell vehicle (FCV) owners. But to gain widespread acceptance, crucial hydrogen-powered applications like FCV's require hydrogen distribution networks of a far broader scope than those presently available.

Efforts to overcome this hydrogen supply and demand impasse have met with mixed success. Stationary and mobile hydrogen distribution systems which have been implemented are either constrained by the means of hydrogen delivery employed (e.g., the need to deliver hydrogen delivery modules by truck), by an aspect of the process used to make the distributed hydrogen (e.g., generation of unwanted steam), or by the fact that the network relies on disparate feedstock sources and is therefore not readily expandable. Specific examples of current hydrogen generation and distribution systems include those described in United States Patent No. 6,745,105 ('105 Patent) and United States Patent Application Document No. 20030118489.

The '105 Patent discloses an energy distribution network which includes a primary energy source; a hydrogen production facility connected to the energy source; a recipient for hydrogen from the hydrogen production facility; and a controller. The network described in the '105 Patent is limited in that it requires the use of an electricity-exporting energy source.

United States Patent Application Document No. 20030118489 describes interconnectable fuel process modules which can be used to generate hydrogen, but does not address optimal integration of such modules with a hydrogen-producing energy source and a hydrogen distribution network.

Consequently, there is need for hydrogen distribution networks which can be expanded incrementally and economically as the demand for hydrogen grows. Ideally, such networks would continuously optimize levels of hydrogen production and distribution based on hydrogen consumption levels, and would deliver hydrogen broadly for use in a wide variety of applications without generating unwanted by-products such as net excess steam. To account for high initial infrastructure costs, the networks would preferably use an existing hydrocarbon feedstock system (e.g., an existing natural gas pipeline system) as source of reactants from which hydrogen can be generated.

### BRIEF SUMMARY OF THE INVENTION

In a preferred embodiment, the invention provides a hydrogen distribution network comprising:
(a) a hydrocarbon feedstock distribution system;
(b) a hydrogen distribution system; and
(c) two or more hydrogen production facilities
wherein (1) the hydrogen production facilities produce minimal or no net excess steam for export and comprise at least one hydrogen production module interconnected to a purification system, (2) the at least one hydrogen production module (a) is configured to receive hydrocarbon feedstock from the hydrocarbon feedstock distribution system (b) reacts the hydrocarbon feedstock chemically to produce (i) a hydrogen-containing product gas, and (ii) minimal or no net excess steam for export; (c) is configured for optional interconnection to one or more additional hydrogen production modules; and (d) is configured to export the hydrogen-containing product gas to a purification system; and (3) the purification system is configured to purify the hydrogen-containing product gas and to export purified hydrogen-containing product gas to the hydrogen distribution system.

In another embodiment, the invention provides a hydrogen distribution network comprising:
(a) a hydrocarbon feedstock distribution system;
(b) a hydrogen distribution system; and
(c) two or more hydrogen production facilities wherein (1) the hydrogen production facilities produce minimal or no net excess steam for export and comprise at least one hydrogen production module which may be optionally interconnected to a purification system; and (2) the at least one hydrogen production module (a) is configured to receive hydrocarbon feedstock from the hydrocarbon feedstock distribution system (b) reacts the hydrocarbon feedstock chemically to produce (i) a hydrogen-containing product gas, and (ii) minimal or no net excess steam for export; (c) is configured for optional interconnection to one or more additional hydrogen production modules; and (d) is configured to export the hydrogen-containing product gas to the hydrogen distribution system. In this embodiment, the hydrogen distribution system may contain a purification system to purify the hydrogen-containing product gas exported by the at least one hydrogen production module.

In order to optimize production and distribution of a hydrogen-containing product gas by a hydrogen distribution network of the invention, the number of hydrogen production modules utilized in any given hydrogen production facility, the configuration, distribution, and interconnection of hydrogen production facilities, and the number and interconnection of hydrogen distribution systems can be varied based on factors such as hydrocarbon feedstock availability and cost; the level, location, and type of hydrogen demand; the number and locations of hydrogen distribution systems used; and constraints imposed by the use of existing hydrocarbon or hydrogen distribution systems.

In preferred embodiments of the invention, natural gas is used as a hydrocarbon feedstock and the hydrogen production modules generate a hydrogen-containing product gas by steam reforming without producing net excess steam for export.

In another preferred embodiment of the invention, natural gas is used as a hydrocarbon feedstock, the hydrogen production facilities produce minimal or no net excess steam for export and comprise one or more hydrogen production modules that generate a hydrogen-containing product gas by steam reforming, a majority of the hydrogen production modules do not produce net excess steam for export, the number of hydrogen production modules utilized in any given hydrogen production facility at any given time varies based on network hydrogen demand, and the hydrogen production facilities distribute a purified hydrogen-containing product gas to a common hydrogen distribution system.

In a particularly preferred embodiment of the invention, the hydrogen production facilities produce minimal or no net excess steam for export and comprise at least one hydrogen production module that is a Modular Partition Reformer (MPR), as defined hereinafter. Preferably, the MPR is configured to receive a hydrocarbon feedstock (e.g., natural gas) from a common hydrocarbon feedstock distribution system (e.g., natural gas distribution system); (b) generates a hydrogen-containing product gas by steam reforming; and (c) does not produce net excess steam for export.

Control means can be associated with the hydrocarbon feedstock distribution system, hydrogen production facilities, and hydrogen distribution system to optimize: the supply of hydrocarbon feedstock to the hydrogen production facilities; the amount of hydrogen-containing product gas produced by the hydrogen production facilities; and the distribution of hydrogen-containing product gas (preferably purified hydrogen-containing product gas) from the hydrogen production facilities to the hydrogen distribution system.

Hydrogen distribution networks of the invention can be configured and expanded in a variety of permutations and can accommodate widely-dispersed hydrocarbon feedstock distribution systems, hydrogen production facilities, and hydrogen distribution systems.

Hydrogen distribution networks of the invention can be integrated with one another. For example, a hydrogen distribution network of the invention can comprise four or more hydrogen production facilities, wherein two or more hydrogen production facilities are configured to receive hydrocarbon feedstock from a hydrocarbon feedstock distribution system which is different from that which supplies hydrocarbon feedstock to another of the hydrogen production facilities. An interactive, widespread fuel distribution network can be established by linking several geographically dispersed hydrogen distribution networks of the invention through control means as described hereinafter.

The invention also provides methods of generating and distributing a purified hydrogen-containing product gas using hydrogen distribution networks of the invention.

Hydrogen distribution networks and methods of the invention offer numerous advantages over known hydrogen distribution systems, including the following.

By integrating a hydrocarbon feedstock system, hydrogen production facilities, and hydrogen distribution system, networks of the invention can optimize hydrocarbon feedstock distribution, hydrogen-containing product gas generation, and purified hydrogen-containing product gas distribution based on factors such as hydrocarbon feedstock supply and hydrogen-containing product gas consumption levels. Networks of the invention can accommodate continuous and intermittent purified hydrogen-containing product gas usage patterns.

Typical installed hydrogen production systems produce massive amounts of net excess steam (on the order of 3,000 lb/hr net excess steam per MMscfd hydrogen); this steam is typically exported for use in refining and other industrial applications. Networks and methods of the invention can efficiently generate hydrogen-containing product gas without producing net excess steam for export. This proves increasingly advantageous as the demand for steam does not necessarily increase in proportion to increased use of hydrogen as a fuel.

Connecting multiple hydrogen production facilities to a single hydrocarbon distribution system, and providing for the modular expansion of hydrogen production facilities, results in economies of scale which translate into lower hydrogen cost. Networks of the invention offer economic advantages associated with both centralized and distributed hydrogen generators. For example, natural gas or another hydrocarbon feedstock can be purchased on a "fully distributed basis", i.e., at a discount rate that takes into account the fact that the natural gas or hydrocarbon feedstock is purchased in bulk for use throughout the entire network. Networks of the invention can also be built with lower initial infrastructure cost by utilizing at least a portion of an existing hydrocarbon feedstock distribution system (e.g., a natural gas distribution system) and by correlating modular expansion of hydrogen production facilities with the demand for purified hydrogen-containing product gas.

Networks of the invention are also safe and environmentally sound. Known hydrogen production facilities can produce a significant amount of net excess steam which, when not used industrially, contributes to inefficiencies in the hydrogen production process, for example by venting, condensing, recycling, or other process inefficiency (e.g. quenching). Such inefficiency contributes to increased hydrocarbon feedstock use, increased cost, and/or global warming. Hydrogen production facilities used in networks of the invention produce minimal or no net excess steam for export and thus avoid this problem. Additionally, a disruption in one portion of a network of the invention can be isolated readily, thereby minimizing the threat posed to the overall network by an accident, natural disaster, or attack.

These and other features of the invention are described further in the detailed

### description of the invention.

### BRIEF DESCRIPTION OF SEVERAL VIEWS OF THE DRAWINGS

Figure 1 illustrates one example of a hydrocarbon feedstock distribution system and hydrogen production facilities network which can be used in a hydrogen distribution network of the instant invention.

Figure 2 illustrates another example of a hydrocarbon feedstock distribution system and hydrogen production facilities network which can be used in a hydrogen distribution network of the instant invention.

Figure 3 illustrates a still further example of a hydrocarbon feedstock distribution system and hydrogen production facilities network which can be used in a hydrogen distribution network of the instant invention.

Figure 4 illustrates the interconnection of hydrocarbon feedstock and hydrogen distribution systems and hydrogen production facilities in one embodiment of a hydrogen distribution network of the instant invention.

Figure 5 illustrates the expansion of the hydrogen distribution system used in the hydrogen distribution network illustrated in Figure 4.

Figures 6A-6D illustrate one example of the implementation and incremental expansion of a hydrogen distribution network of the instant invention.

### DETAILED DESCRIPTION OF THE INVENTION

The following definitions apply unless indicated otherwise.

"Hydrocarbon feedstock" includes any hydrocarbon which can be reacted chemically to produce a hydrogen-containing product gas. Hydrocarbon feedstocks include but are not limited to light hydrocarbons such as natural gas, naphtha, and refinery offgases, and high molecular weight liquids or solid carbonaceous materials.

"Hydrocarbon feedstock distribution system" includes any system by which hydrocarbon feedstock can be supplied to hydrogen production facilities. Natural gas pipeline distribution networks are preferred hydrocarbon feedstock distribution systems. Hydrocarbon feedstock distribution systems also include systems which are connected through use of well-known infrastructure (e.g., pipes, valves, compressors, etc.) to industrial hydrocarbon feedstock sources, e.g., multiple hydrocarbon feedstock-containing refinery off gases or hydrocarbon feedstock-containing off gases from other processes. In one embodiment, a hydrocarbon feedstock distribution system can include a high pressure natural gas main coupled to a lower pressure service conduit by way of a natural gas regulator.

"Reacting hydrocarbon feedstock chemically", or "produce a hydrogen-containing product gas through the same or different chemical reaction", include any chemical reaction by which a hydrocarbon feedstock can be reacted chemically in hydrogen production modules to produce a hydrogen-containing product gas. "Reacting hydrocarbon feedstock chemically", or "produce a hydrogen-containing product gas through the same or different chemical reaction", include but are not limited to: steam reforming of light hydrocarbons (primarily natural gas, naphtha, and refinery offgases); dry reforming; the partial oxidation of carbon-containing feedstocks (ranging from natural gas to high molecular weight liquid or solid carbonaceous materials); non-oxidative catalytic decomposition; and autothermal reforming of light hydrocarbon feed (which combines features of both partial oxidation and steam reforming in a single reactor).

Steam reforming is a preferred process for reacting hydrocarbon feedstock chemically to produce a hydrogen-containing product gas. In steam reforming, a hydrocarbon and steam mixture (a "mixed-feed") reacts in the presence of a catalyst to form hydrogen, carbon monoxide and carbon dioxide. Since the reforming reaction is strongly endothermic, heat must be supplied to the reactant mixture, e.g., by heating the tubes in a furnace or reformer. The amount of reforming achieved depends on the temperature of the gas leaving the catalyst; exit temperatures in the range of around 800° C to around 950° C are typical for conventional hydrocarbon reforming.

"Hydrogen-containing product gas" is produced by reacting hydrocarbon feedstock chemically, as defined above. In networks and methods of the invention, the hydrogen-containing product gas may be purified by a purification system (as defined hereinafter) to yield a purified hydrogen-containing product gas as defined hereinafter.

"Purification systems" may: (1) be integrated within either or both of the hydrogen production facilities or hydrogen distribution network; and (2) include and use separation apparatus and processes that are well-known to those of ordinary skill in the art in order to produce a purified hydrogen-containing product gas. For example, a purification system can comprise a shift reactor and purification unit such as a pressure swing adsorber, wherein (1) the shift reactor is configured (a) for the receipt of hydrogen-containing product gas produced by a hydrogen production module; and (b) for the export of a partially purified (e.g., about 60% to about 80% by volume hydrogen on a dry basis (i.e., excluding water) hydrogen-containing product gas to the purification unit; and
wherein (2) the purification unit (a) is configured to receive partially-purified hydrogen-containing product gas from the shift reactor; (b) further purifies the partially-purified hydrogen-containing product gas to yield a purified hydrogen-containing product gas; and (c) is configured to export purified hydrogen-containing product gas to a hydrogen distribution system.

"Purified hydrogen-containing product gas" means a hydrogen-containing product gas containing around 90% to around 99% by volume hydrogen on a dry basis (i.e., excluding water), more preferably at least around 99.9% by volume hydrogen on a dry basis (i.e., excluding water), most preferably at least around 99.999% by volume hydrogen on a dry basis (i.e., excluding water).

"Minimal or no net excess steam for export" means that the hydrogen production facilities used in a hydrogen distribution network of the invention produce in the aggregate a total of less than about 1,000 lb/hr net excess steam per MMscfd hydrogen contained in the purified hydrogen-containing product gas produced by the hydrogen production facilities, more preferably less than about 650 lb/hr net excess steam per MMscfd hydrogen, even more preferably less than 100 lb/hr net excess per MMscfd hydrogen, and most preferably zero lb/hr net excess steam per MMscfd hydrogen. When used in reference to a hydrogen production module, "minimal net excess steam for export" means that the hydrogen production module produces a total of less than about 1,000 lb/hr net excess steam per MMscfd hydrogen contained in the hydrogen-containing product gas produced by the hydrogen production module, more preferably less than about 650 lb/hr net excess steam per MMscfd hydrogen, even more preferably less than 100 lb/hr net excess per MMscfd hydrogen, and most preferably zero lb/hr net excess steam per MMscfd hydrogen.

It is well-known to use excess steam from a hydrogen production process in a power generation process to produce power. In the instant invention, hydrogen production processes and power generation processes are considered to be separate processes. Steam consumed for the production of power is considered to have been exported from the hydrogen production process to the power generation process.

"Hydrogen production facilities" produce minimal or no net excess steam for export and comprise at least one hydrogen production module optionally interconnected to a purification system, wherein the at least one hydrogen production module (a) is configured to receive hydrocarbon feedstock from a hydrocarbon feedstock distribution system (b) reacts the hydrocarbon feedstock chemically to produce (i) a hydrogen-containing product gas, and (ii) minimal or no net excess steam for export; (c) is configured for optional interconnection to one or more additional hydrogen production modules; and (d) is configured to export the hydrogen-containing product gas to a hydrogen distribution network, optionally through an interconnected purification system. Within a hydrogen production facility, a hydrogen production module may be interconnected to a purification system; a hydrogen production module and interconnected purification system can comprise a single process unit.

Hydrogen production facilities may optionally be designed to produce hydrogen efficiently, i.e., by consuming less than around 75,000 btu of hydrocarbon feedstock (e.g. natural gas) on a higher heating value basis per pound of hydrogen contained in the purified hydrogen-containing product gas while simultaneously producing minimal or no net excess steam for export. The scope of the instant invention is not limited by the efficiencies of the hydrogen production facilities used in the hydrogen distribution networks.

Within any hydrogen production facility used in networks of the invention, two or more hydrogen production modules can be interconnected in series or in parallel and can receive hydrocarbon feedstock directly from a common hydrocarbon feedstock distribution system or from another hydrogen production module which is configured (1) to receive hydrocarbon feedstock directly from the hydrocarbon feedstock distribution system, and (2) to transmit a portion of that hydrocarbon feedstock to an interconnected hydrogen production module.

Hydrogen production facilities may export purified hydrogen-containing product gas to one or more optionally interconnected hydrogen distribution systems.

Hydrogen production modules which can be used in networks of the invention include but are not limited to modular steam reformers including Modular Partition Reformers (MPR's), such as those described in commonly-owned United States Patent No. 6,793,700 ('700 Patent) and United States Patent Application Serial No. 10/746,577, the complete disclosures of which are hereby incorporated by reference. Hydrogen production modules which can be used in the networks of the invention also include but are not limited to: (1) microchannel reformers; and (2) HGM hydrogen generation modules (HGM Generators) (H2Gen Innovations, Inc., Alexandria, Virginia), including reactors as described in United States Patent Application Document Nos. 20050097819 and 20030034152

One embodiment of a MPR that is disclosed in the '700 Patent and that can be used in networks of the invention includes: a combustion chamber, a convection chamber in fluid communication with the combustion chamber, at least one burner disposed in the combustion chamber, and a reaction chamber. The combustion chamber has a first end and a second end opposite the first end. The convection chamber has a first end and a second opposite the first end, the first end of the convection chamber being adjacent the second end of the combustion chamber. The at least one burner is disposed in the combustion chamber and is adapted to combust a fuel, thereby generating a flow of a flue gas from the combustion chamber to the convection chamber, the flue gas having a sensible heat. The reaction chamber has a first part and a second part in fluid communication with the first part. A substantial portion of the first part is disposed in the combustion chamber and a substantial portion of the second part is disposed in the convection chamber. The second part is a tube-in-tube having an annular portion between an inner tubular portion and an outer tubular portion surrounding the inner tubular portion. The apparatus also includes a means for flowing a first mixed-feed through the first part of the reaction chamber, and a means for flowing a second mixed-feed through the annular portion of the second part of the reaction chamber counter-currently with the flow of the flue gas in the convection chamber.

MPR's disclosed in the '700 Patent can combine combustion and convection chambers in one compact unit that can be built in the shop and serve as a modular unit, so that several units can be added with relatively simple connections in the field to achieve or to expand synthesis gas production capacity. MPR units may optionally be designed to produce hydrogen efficiently, i.e., by consuming less than 75,000 btu of hydrocarbon feedstock (e.g. natural gas) on a higher heating value basis per pound of hydrogen contained in the hydrogen conatining product gas produced, while simultaneously producing minimal or no net excess steam for export.

One embodiment of a MPR disclosed in United States Patent Application Serial No. 10/746,577 which can be used in networks of the invention includes a vessel having at least one partition wall disposed in the vessel. The at least one partition wall divides the vessel into a plurality of chambers, including at least one combustion chamber and at least one convection chamber. Each of the chambers has a first end and a second end opposite the first end. At least one burner is disposed in the combustion chamber. The burner is adapted to combust a fuel, thereby generating a flue gas having sensible heat. The apparatus also includes communication means between the combustion chamber and the convection chamber whereby at least a portion of the flue gas flows from the combustion chamber to the convection chamber at a first location adjacent the first end of the convection chamber. The apparatus also includes transfer means whereby at least a portion of the flue gas flows to a second location in the convection chamber adjacent the second end of the convection chamber. The apparatus also includes multiple reaction chambers, including a first reaction chamber and a second reaction chamber. A substantial portion of the first reaction chamber is disposed in the combustion chamber, and a substantial portion of the second reaction chamber is disposed in the convection chamber.

MPR's disclosed in United States Patent Application Serial No. 10/746,577 are in the form of a compact unit that may be built in the shop and may be used as a modular unit in a configuration where several units set side-by-side are connected with simple connections at a field site to achieve or to expand synthesis gas production capacity. MPR units may also be optionally designed to produce hydrogen efficiently, i.e., by consuming less than around 75,000 btu of hydrocarbon feedstock (e.g. natural gas) on a higher heating value basis per pound of hydrogen contained in the hydrogen containing product gas produced, while simultaneously producing minimal or no net excess steam for export.

"Hydrogen distribution system" includes any system suitable for the transmission of a purified hydrogen-containing product gas to a hydrogen consumer. A hydrogen distribution system can include a pipeline hydrogen distribution system which transmits a purified hydrogen-containing product gas from hydrogen production facilities to a variety of types of hydrogen consumers (including stationary (e.g., residential and industrial) consumers and vehicular consumers (e.g., operators of FCV's, planes, or ships) through a network of interconnected pipelines and compressors, and if necessary, hydrogen-containing product gas storage and/or purification facilities. A hydrogen distribution system could also include or be limited to a vehicular (e.g., truck or train) distribution system. The number and configuration of hydrogen distribution systems used in a hydrogen distribution network of the invention can be optimized based on particular network needs.

A hydrogen distribution system used in networks of the invention can, for example: (1) include a hydrogen fueling station, including but not limited to a vehicular hydrogen fueling station, e.g., as described in United States Patent No. 6,810,925; (2) provide a purified hydrogen-containing product gas which serves as a source of the hydrogen precursor defined in United States Patent No. 6,745,801; (3) provide a purified hydrogen-containing product gas which is delivered at a controlled rate of delivery to receiving tanks of various sizes, e.g., in accordance with the invention described in United States Patent No. 6,786,245; (4) use methods and apparatus useful for transferring a purified hydrogen-containing product gas from a refueling station into one or more storage tanks, e.g., as described in United States Patent No. 6,619,336; and (5) provide a purified hydrogen-containing product gas to: (a) an industrial gas application, (b) a stationary fuel cell, and (c) to a transportation application (e.g., an airport or a distribution center that uses forklifts or other vehicles powered in whole or in part by hydrogen).

"Control means" can be associated with the hydrogen production facilities, hydrocarbon feedstock distribution system, and hydrogen distribution systems used in networks of the invention. The control means can perform a variety of functions, including regulation and optimization of the supply of hydrocarbon feedstock to the hydrogen production facilities and component hydrogen production modules and the export of purified hydrogen-containing product gas from the hydrogen production facilities to the hydrogen distribution system.

Control means can include computer systems comprising central processing units (CPU's) for processing data related to network parameters (e.g., hydrocarbon feedstock flow rates and hydrogen-containing product gas production and consumption rates), associated memory media including floppy disks or compact discs (CD's) which may store program instructions for CPU's, one or more display devices e.g.monitors, one or more alphanumeric input devices e.g. a keyboard, and one or more directional input devices such as a mouse. Computer systems used in control means can include a computational system memory such as DRAM, SRAM, EDO DRAM, SDRAM, DDR SDRAM, or Rambus RAM, or a non-volatile memory such as a magnetic media (e.g., a hard drive) or optical storage. The memory medium preferably stores a software program or programs for event-triggered transaction processing. The software program(s) may be implemented in any of various ways, including procedure-based techniques, component-based techniques, and/or object-oriented techniques, among others.

Control means can include instrumentation for: (1) monitoring analog input data relating to process parameters (e.g., hydrocarbon feedstock flow rates and hydrogen-containing product gas production rates); (2) converting such analog input data to CPU input digital signals for CPU processing and generation of CPU digital output signals; and (3) converting CPU digital output signals to analog signals that vary hydrogen distribution network process parameters (such as hydrocarbon feedstock flow rates and purified hydrogen-containing product gas production rates) in accordance with CPU digital output signals. Thus, control means can provide real-time, feedback control of network operation.

In addition to regulating a hydrogen distribution network in response to hydrogen distribution network process parameters, control means can, through hardwired or wireless transmission, receive and respond to external data that do not relate to hydrogen distribution network process parameters. Such external data include but not are limited to: wireless transmissions from on-board FCV fuel monitor sensors which alert the network as to the hydrogen fuel levels of vehicles in its vicinity; hydrocarbon feedstock cost; external inventory levels; projected weather conditions; and projected peak hydrogen-containing product gas consumption times. Control means can also be associated with external databases (e.g., financial institution databases or emergency response databases) for the transmission of data which does not relate to a hydrogen distribution network process parameter to enable, e.g., (1) real-time commodity pricing or investment decisions or (2) decisions regarding the activation or deactivation of network segments, e.g., hydrogen production modules, based on, e.g., network hydrocarbon feedstock consumption and purified hydrogen-containing product gas production, hydrocarbon feedstock or hydrogen pricing, or external events such as an accident, blackout, natural disaster, terrorist threat, or attack

Well-known infrastructure (e.g., piping, valves, compressors, and control means) can be used to: (1) configure hydrogen production facilities and component hydrogen production modules to receive hydrocarbon feedstock from a hydrocarbon feedstock distribution system; (2) configure hydrogen production modules for interconnection to one another; and (3) configure hydrogen production modules to export hydrogen-containing product gas to a hydrogen distribution system. Similarly, well-known infrastructure can be used to connect a hydrogen distribution system to: (1) a hydrogen fueling station, e.g., a hydrogen fueling station as described in United States Patent No. 6,810,925; (2) a mobile hydrogen generation and supply system, e.g., a mobile hydrogen generation and supply system as described in United States Patent No. 6,745,801; (3) receiving tanks of various sizes, e.g., in accordance with the invention described in United States Patent No. 6,786,245; (4) to apparatus useful for transferring a gas from a refueling station into one or more storage tanks (e.g., to apparatus as described in United States Patent No. 6,619,336); and (5) (a) to an industrial gas application, (b) a stationary fuel cell, and to (c) a transportation application (e.g., an airport or a distribution center that uses forklifts or other vehicles powered in whole or in part by hydrogen).

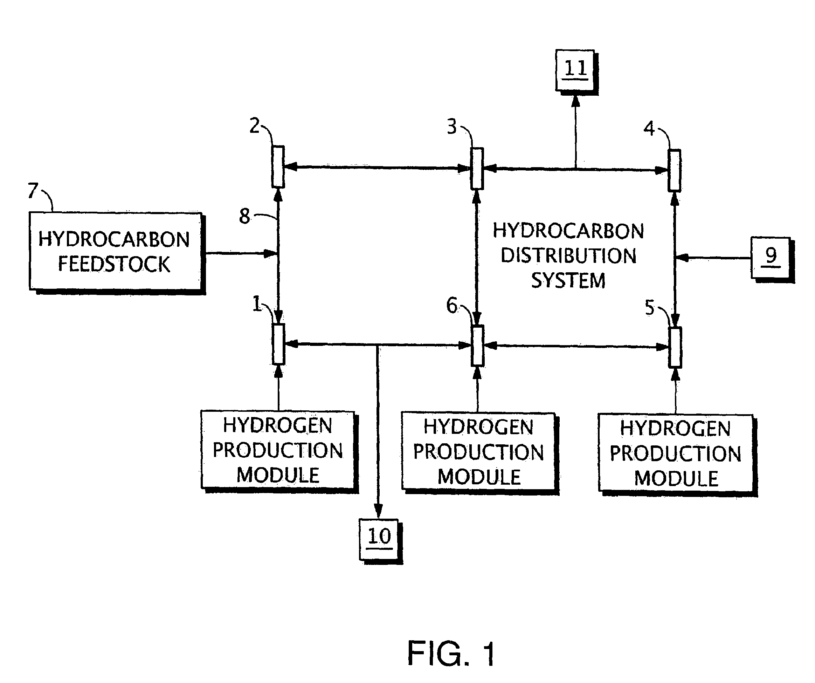

Figures 1-5 and Figures 6A-D depict purely illustrative examples of the construction and expansion of a hydrogen distribution network of the invention. In the illustrations of hydrogen production facilities in Figures 1-5 and Figures 6A-D, hydrogen production modules and interconnected purification systems are depicted conceptually in single block format.

Figure 1 illustrates one example of a hydrocarbon feedstock distribution system and hydrogen production facilities network which can be used in a hydrogen distribution network of the instant invention.

In the network illustrated in Figure 1, hydrocarbon feedstock is distributed to hydrogen production facilities 1-6 by a common hydrocarbon feedstock distribution system 8 and each of hydrogen production facilities 1-6 is substantially identical and is comprised of a single hydrogen production module. Hydrogen production facilities 1-6: (1) react hydrocarbon feedstock chemically to produce a hydrogen-containing product gas and minimal or no net excess steam for export; and (2) purify the hydrogen-containing product gas. Hydrocarbon feedstock may enter (7, 9) and exit (10, 11) the hydrocarbon feedstock distribution system 8 at multiple points.

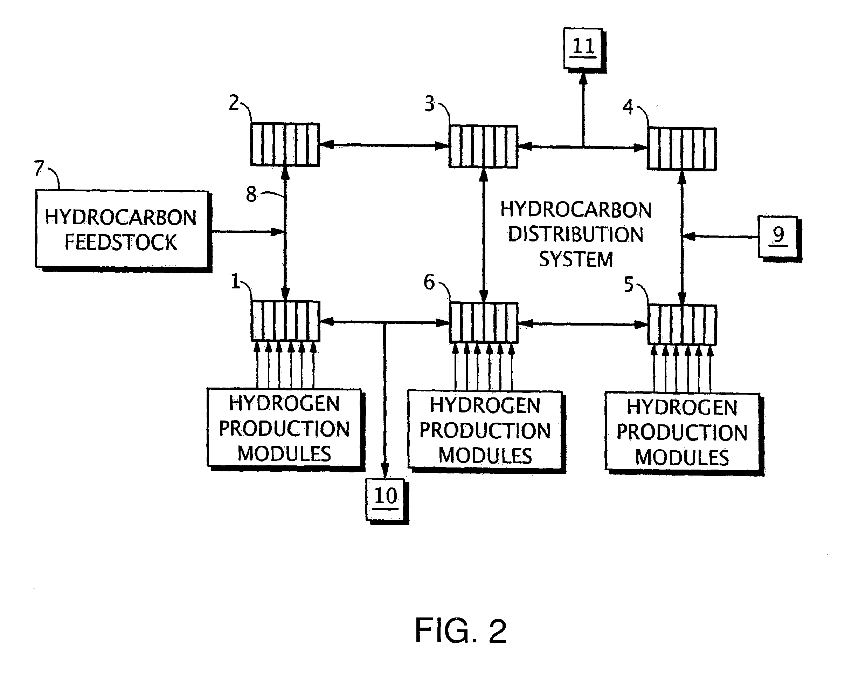

Figure 2 illustrates another example of a hydrocarbon feedstock distribution system and hydrogen production facilities network which can be used in a hydrogen distribution network of the instant invention. The hydrocarbon feedstock distribution system and hydrogen production facilities network shown in Figure 2 can be built by modifying the hydrocarbon feedstock distribution system and hydrogen production facilities network shown in Figure 1 through addition of hydrogen production modules to the hydrogen production facilities 1-6 illustrated in Figure 1.

In the network illustrated in Figure 2, hydrocarbon feedstock is distributed to similar modular hydrogen production facilities 1-6 by common hydrocarbon feedstock distribution system 8 and each of hydrogen production facilities 1-6 is substantially identical and is comprised of more than one hydrogen production module. Hydrogen production facilities 1-6: (1) react hydrocarbon feedstock chemically to produce hydrogen-containing product gas and minimal or no net excess steam for export; and (2) purify the hydrogen-containing product gas. Hydrocarbon feedstock may enter (7, 9) and exit (10, 11) the hydrocarbon feedstock distribution system 8 at multiple points.

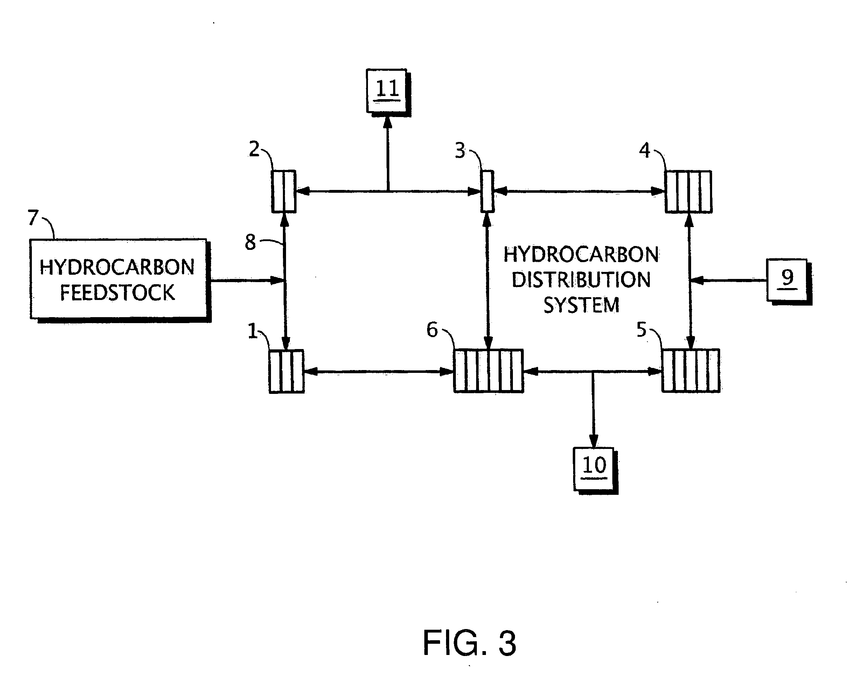

Figure 3 illustrates a still further example of a hydrocarbon feedstock distribution system and hydrogen production facilities network which can be used in a hydrogen distribution network of the instant invention. The hydrocarbon feedstock distribution system and hydrogen production facilities network shown in Figure 3 can be built by modifying the hydrocarbon feedstock distribution system and hydrogen production facilities network shown in Figure 1 through the addition of hydrogen production modules to hydrogen production facilities 1-6 illustrated in Figure 1.

In the network illustrated in Figure 3, hydrocarbon feedstock is distributed to modular hydrogen production facilities 1-6 by common hydrocarbon feedstock distribution system 8 and the hydrogen production facilities 1-6 are comprised of either one or more than one hydrogen production modules. Hydrogen production facilities 1-6: (1) react hydrocarbon feedstock chemically to produce hydrogen-containing product gas and minimal or no net excess steam for export; and (2) purify the hydrogen-containing product gas. Hydrocarbon feedstock may enter (7, 9) and exit (10, 11) the hydrocarbon feedstock distribution system 8 at multiple points.

As illustrated in Figure 3, the location of hydrogen production facilities, and the number of hydrogen production modules used in any hydrogen production facility, can be optimized based on the needs of a particular hydrogen distribution network.

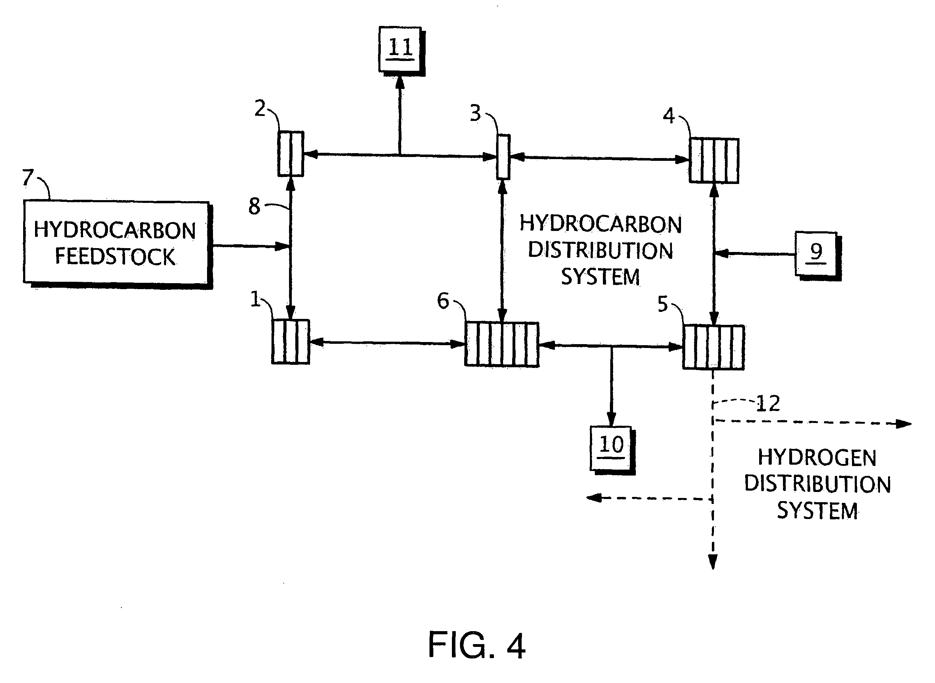

Figure 4 illustrates the interconnection of hydrocarbon feedstock and hydrogen distribution systems and hydrogen production facilities in one embodiment of a hydrogen distribution network of the instant invention.

In the embodiment illustrated in Figure 4, hydrocarbon feedstock is distributed to modular hydrogen production facilities 1-6 by common hydrocarbon feedstock distribution system 8, and hydrogen production facilities 1-6: (a) are comprised of either one or more than one hydrogen production modules; (b) react hydrocarbon feedstock chemically to produce hydrogen-containing product gas and minimal or no net excess steam for export; (c) purify the hydrogen-containing product gas. Hydrocarbon feedstock may enter (7, 9) and exit (10, 11) the hydrocarbon feedstock distribution system 8 at multiple points. Hydrogen distribution system 12 is connected to hydrogen production facility 5 for the receipt of purified hydrogen-containing product gas produced by any or all of hydrogen production facilities 1-6.

As illustrated in Figure 4, the location of hydrogen production facilities, the number of hydrogen production modules used in any hydrogen production facility, and the connection of the hydrogen distribution system to the hydrogen production facilities, can be optimized based on the needs of a particular hydrogen distribution network.

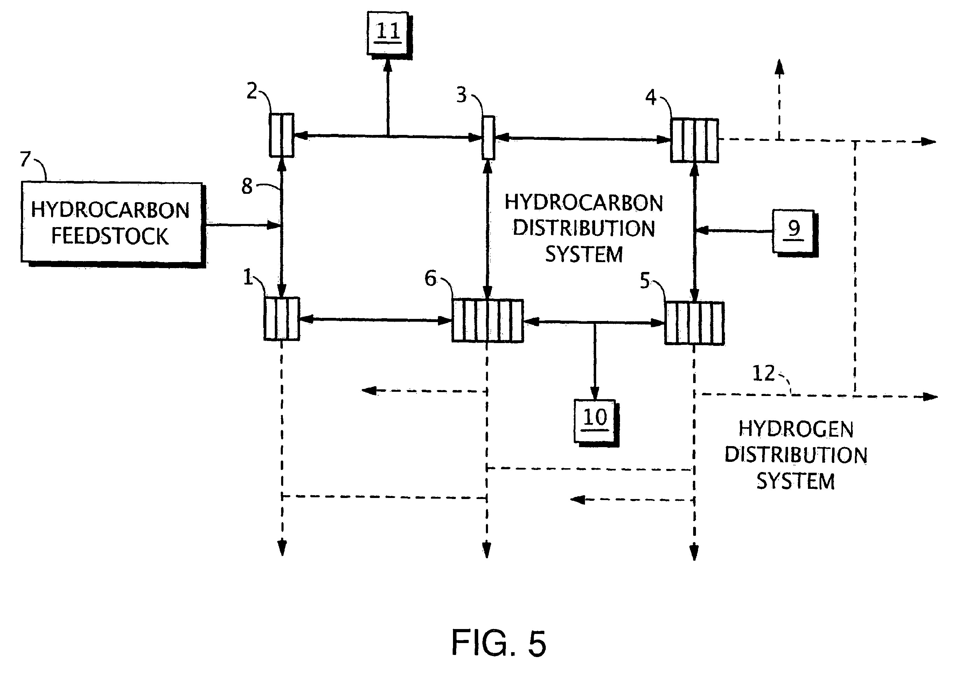

Figure 5 illustrates the expansion of the hydrogen distribution system used in the hydrogen distribution network illustrated in Figure 4. In the embodiment illustrated in Figure 5, hydrocarbon feedstock is distributed to modular hydrogen production facilities 1-6 by a common hydrocarbon feedstock distribution system 8, and hydrogen production facilities 1-6 are: (a) comprised of either one or more than one hydrogen production modules; (b) react hydrocarbon feedstock chemically to produce hydrogen-containing product gas and minimal or no net excess steam for export; and (c) purify the hydrogen-containing product gas. Hydrocarbon feedstock may enter (7, 9) and exit (10, 11) the hydrocarbon feedstock distribution system 8 at multiple points. Hydrogen distribution system 12: (a) is connected to hydrogen production facilities 1, 4, 5, and 6 for the receipt of purified hydrogen-containing product gas produced by any or all of hydrogen production facilities 1-6; and (b) can distribute purified hydrogen-containing product gas through any number of pathways, which may overlap with hydrocarbon feedstock distribution system 8.

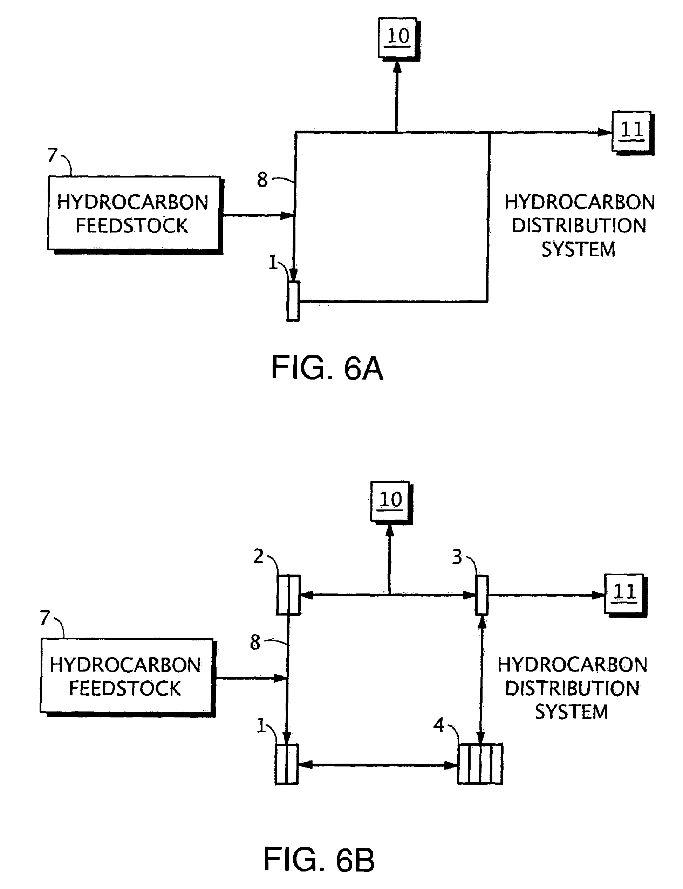

Figures 6A-6D illustrate one example of the implementation and incremental expansion of a hydrogen distribution network of the instant invention. The hydrogen production facilities illustrated in Figures 6A-6D react hydrocarbon feedstock chemically to produce a purified hydrogen-containing product gas and minimal or no net excess steam for export.

As shown in Figure 6A, implementation of a hydrogen distribution network of the invention can begin by construction of a single hydrogen production facility 1, which is: (a) comprised of a single hydrogen production module interconnected to a purification system, and (b) connected to an existing hydrocarbon feedstock distribution system 8. Hydrocarbon feedstock may enter (7) and exit (10, 11) the hydrocarbon feedstock distribution 8 system at multiple points.

Figure 6B illustrates the addition of hydrogen production facilities 2, 3, and 4 to the existing network of hydrocarbon feedstock distribution system 8 and single hydrogen production facility 1 illustrated in Figure 6A. Figure 6B also illustrates the expansion of hydrogen production facility 1 by the addition of a hydrogen production module and interconnected purification system. As shown in Figure 6 B, hydrocarbon feedstock may enter (7) and exit (10, 11) the hydrocarbon feedstock distribution system 8 at multiple points.

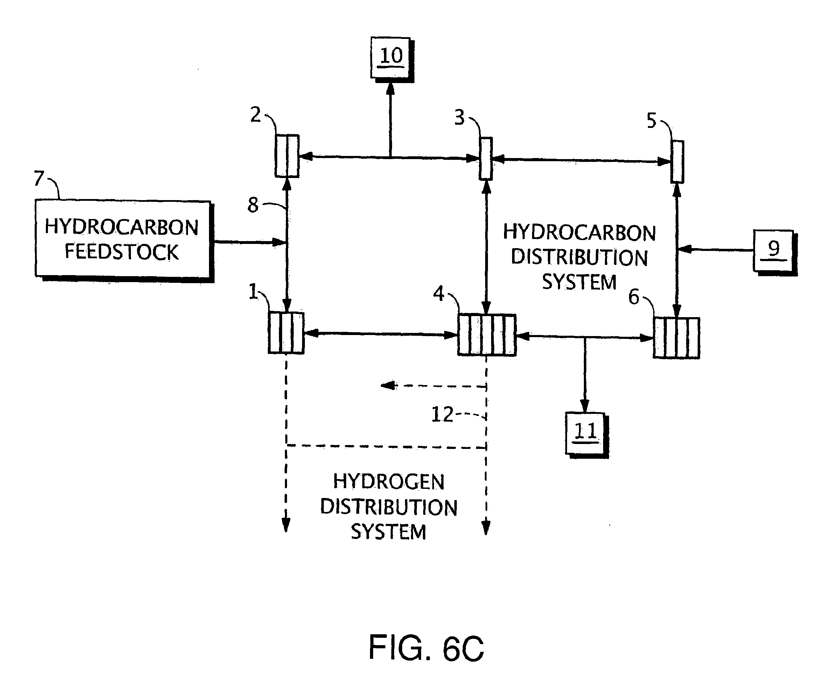

Figure 6C illustrates: (1) further expansion and optimization of the existing network of hydrogen production facilities 1-4 and hydrocarbon feedstock distribution system 8 shown in Figure 6B by (a) addition of hydrogen production facilities 5 and 6, and (b) expansion of existing hydrogen production facilities 1 and 4 by addition of hydrogen production modules and interconnected purification systems; and (2) the establishment of a hydrogen distribution network of the invention by interconnection of hydrogen distribution system 12 to hydrogen production facilities 1 and 4. Hydrocarbon feedstock may enter (7, 9) and exit (10, 11) the hydrocarbon feedstock distribution system 8 at multiple points. In the embodiment illustrated in Figure 6C, hydrogen distribution system 12 is interconnected to hydrogen production facilities 1 and 4 for the receipt of purified hydrogen-containing product gas produced by any or all of hydrogen production facilities 1-6.

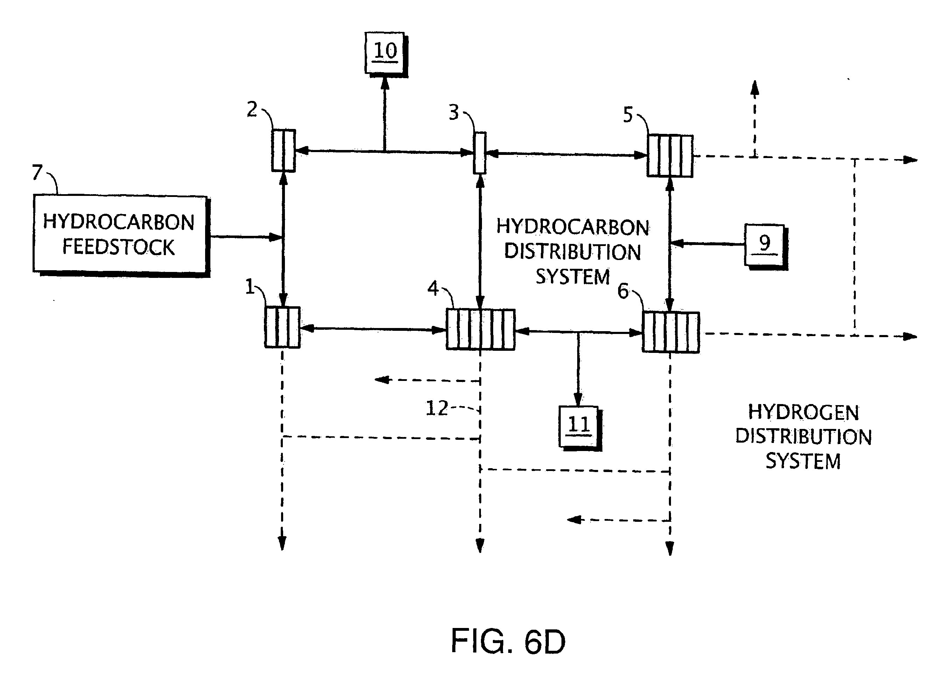

Figure 6D illustrates further expansion and optimization of the existing hydrogen distribution network shown in Figure 6C by: (1) expansion of hydrogen production facilities 4, 5, and 6 by addition of hydrogen production modules and interconnected purification systems; and (2) interconnection of hydrogen distribution system 12 to hydrogen production facilities 5 and 6. As shown in Figure 6D, hydrocarbon feedstock may enter (7, 9) and exit (10, 11) the hydrocarbon feedstock distribution system 8 at multiple points and hydrogen distribution system 12 may overlap with hydrocarbon feedstock distribution system 8.

To meet a growing demand for hydrogen, additional hydrogen production facilities can be added to the hydrogen distribution network depicted in Figure 6D, and/or existing hydrogen production facilities may be expanded modularly.

Although illustrated and described herein with reference to certain specific embodiments, the present invention is nevertheless not intended to be limited to the details shown. Rather, various modifications may be made in the details within the scope and range of equivalents of the claims and without departing from the spirit of the invention.

## Claims

1. A hydrogen distribution network comprising:
(a) a hydrocarbon feedstock distribution system (8);
(b) a hydrogen distribution system (12); and
(c) two or more hydrogen production facilities (1-6) which produce minimal or no net excess steam for export, wherein
(1) the hydrogen production facilities (1-6) comprise at least one hydrogen production module interconnected to a purification system,
(2) the at least one hydrogen production module
(a) is configured to receive hydrocarbon feedstock from the hydrocarbon feedstock distribution system (8)
(b) reacts the hydrocarbon feedstock chemically to produce
(i) a hydrogen-containing product gas, and
(ii) minimal or no net excess steam for export;
(c) is configured for optional interconnection to one or more additional hydrogen production modules; and
(d) is configured to export the hydrogen-containing product gas to the purification system; and
(3) the purification system is configured to purify the hydrogen-containing product gas and to export purified hydrogen-containing product gas to the hydrogen distribution system (12).

2. A hydrogen distribution network of claim 1, wherein the hydrogen production facilities do not produce net excess steam for export,
especially wherein one or more hydrogen production modules (1-6) generate a hydrogen-containing product gas by steam reforming, dry reforming, autothermal reforming, partial oxidation, or non-oxidative catalytic decomposition,
and/or wherein the hydrocarbon feedstock distribution system (8) is either an existing natural gas distribution system or a system which receives hydrocarbon feedstock from an industrial hydrocarbon feedstock source.

3. A hydrogen distribution network of one of claims 1 or 2, comprising a hydrogen production facility (1-6) comprised of two or more hydrogen production modules that produce a hydrogen-containing product gas by the same chemical reaction,
especially wherein at least one of the hydrogen production modules is a Modular Partition Reformer

4. A hydrogen distribution network of one of claims 1 to 3, wherein the hydrogen distribution system (12) includes a hydrogen fueling station,
especially wherein the hydrogen fueling station is a vehicular hydrogen fueling station.

5. A hydrogen distribution network of one of claims 1 to 4, wherein the hydrogen distribution system (12) distributes a purified hydrogen-containing product gas to an industrial gas application, a stationary fuel cell, or to a transportation application,
and/or wherein the hydrogen production facilities export purified hydrogen-containing product gas to more than one hydrogen distribution system (12),
especially wherein the hydrogen production facilities export purified hydrogen-containing product gas to the same hydrogen distribution system (12).

6. A hydrogen distribution network of one of claims 1 to 5, further comprising control means associated with the hydrogen production facilities (1-6), hydrocarbon feedstock distribution system (8), and hydrogen distribution system (12) to regulate the supply of hydrocarbon feedstock to the hydrogen production facilities (1-6) and the export of purified hydrogen-containing product gas from the hydrogen production facilities (1-6) to the hydrogen distribution system (12),
especially wherein the control means regulate the supply of hydrocarbon feedstock to the hydrogen production facilities (1-6) and the export of purified hydrogen-containing product gas from the hydrogen production facilities (1-6) to the hydrogen distribution system (12) based on the rate at which purified hydrogen-containing product gas is distributed from the hydrogen distribution system (12).

7. A hydrogen distribution network of one of claims 1 to 6 wherein:
(a) the hydrocarbon feedstock distribution system is a natural gas distribution system; and
(b) the hydrogen production facilities (1-6) comprise at least one Modular Partition Reformer which
(i) is configured to receive natural gas from the natural gas distribution system
(ii) reacts the natural gas chemically to produce
(1) a hydrogen-containing product gas, and
(2) minimal or no net excess steam for export;
(iii) is configured for optional interconnection to one or more additional hydrogen production modules; and
(iv) is configured to export the hydrogen-containing product gas to the purification system.

8. A hydrogen distribution network of one of claims 6 or 7, wherein the control means are associated with an external database for the transmission of data which does not relate to a hydrogen distribution network process parameter and wherein the control means regulate the supply of hydrocarbon feedstock to the hydrogen production facilities (1-6) and the export of purified hydrogen-containing product gas from the hydrogen production facilities (1-6) to the hydrogen distribution system (12) in response to such data.

9. A method of generating and distributing a purified hydrogen-containing product gas comprising:
(a) distributing a hydrocarbon feedstock from a hydrocarbon feedstock distribution system (8) to two or more hydrogen production facilities (1-6);
(b) generating a purified hydrogen-containing product gas in the hydrogen production facilities (1-6) by chemical reaction of the hydrocarbon feedstock to yield a hydrogen-containing product gas, which is purified to yield the purified hydrogen-containing product gas; and
(c) exporting the purified hydrogen-containing product gas from the hydrogen production facilities (1-6) to a hydrogen distribution system (12), wherein the hydrogen production facilities (1-6) produce minimal or no net excess steam for export and comprise at least one hydrogen production module interconnected to a purification system, and wherein
(1) the at least one hydrogen production module
(a) is configured to receive the hydrocarbon feedstock from the hydrocarbon feedstock distribution system
(b) reacts the hydrocarbon feedstock chemically to produce
(i) a hydrogen-containing product gas, and
(ii) minimal or no net excess steam for export;
(c) is configured for optional interconnection to one or more additional hydrogen production modules; and
(d) is configured to export the hydrogen-containing product gas to the purification system; and wherein
(2) the purification system is configured to purify the hydrogen-containing product gas and to export purified hydrogen-containing product gas to the hydrogen distribution system (12).

10. A method of claim 9, wherein:
(1) the hydrocarbon feedstock is natural gas;
(2) at least one hydrogen production module produces a hydrogen-containing product gas by steam reforming of the natural gas; and
(3) no hydrogen production module produces net excess steam for export, especially wherein at least one hydrogen production module is a Modular Partition Reformer,
and/or wherein the hydrogen distribution system (12) includes a hydrogen fueling station,
especially a vehicular hydrogen fueling station.

11. A method of one of claims 9 or 10 for distributing a fuel comprising dispensing a purified hydrogen-containing product gas from a hydrogen distribution system (12) to a storage tank, wherein the purified hydrogen-containing product gas
(a) is generated in two or more hydrogen production facilities (1-6); and
(b) is exported from the hydrogen production facilities (1-6) to the hydrogen distribution system (12); and wherein
(1) the hydrogen production facilities (1-6) produce minimal or no net excess steam for export and comprise at least one hydrogen production module interconnected to a purification system,
(2) the at least one hydrogen production module
(a) is configured to receive hydrocarbon feedstock from a hydrocarbon feedstock distribution system (12),
(b) reacts the hydrocarbon feedstock chemically to produce
(i) a hydrogen-containing product gas, and
(ii) minimal or no net excess steam for export;
(c) is configured for optional interconnection to one or more additional hydrogen production modules; and
(d) is configured to export the hydrogen-containing product gas to a purification system; and
(3) the purification system is configured to purify the hydrogen-containing product gas and to export purified hydrogen-containing product gas to the hydrogen distribution system (12).

12. A method of claim 11, wherein:
(a) the hydrogen distribution system comprises a hydrogen fueling station; the storage tank is installed at a residential or industrial facility,
(b) purified hydrogen-containing product gas is distributed from the hydrogen distribution system to the storage tank at the hydrogen fueling station; and
(c) the storage tank is installed at a residential or industrial facility, especially wherein:
(a) the hydrogen distribution system comprises a vehicular hydrogen fueling station;
and (b) the storage tank is a vehicular storage tank.

13. A method comprising increasing the hydrogen-containing product gas production capacity of a hydrogen distribution network of one of claims 1 to 8 by:
(1) adding one or more additional hydrogen production modules to the at least one hydrogen production module; or
(2) adding one or more additional hydrogen production facilities (1-6) to the hydrocarbon feedstock distribution network and hydrogen distribution network.

14. A method comprising expanding a hydrogen distribution network of one of claims 1 to 8 by expanding the hydrogen distribution system (12),
especially wherein expansion of the hydrogen distribution system includes interconnecting a hydrogen fueling station to the hydrogen distribution system.

15. A method of optimizing the generation and distribution of a purified hydrogen-containing product gas in a hydrogen distribution network of one of claims 1 to 8, comprising using the control means to regulate either:
(a) the supply of hydrocarbon feedstock to the hydrogen production facilities (1-6), or
(b) the export of purified hydrogen-containing product gas from the hydrogen production facilities (1-6) to the hydrogen distribution system (1-6), especially comprising:
(a) transmitting data which does not relate to a hydrogen distribution network process parameter from the external database to the control means; and
(b) in response to the transmitted data, using the control means to regulate either:
(i) the supply of hydrocarbon feedstock to the hydrogen production facilities (1-6), or
(ii) the export of purified hydrogen-containing product gas from the hydrogen production facilities to the hydrogen distribution system (12).

16. A hydrogen distribution network of one of claims 1 to 8, comprising at least two hydrogen production facilities (1-6) which:
(1) each consume less than around 75,000 btu of hydrocarbon feedstock on a higher heating value basis per pound of purified hydrogen- containing product gas produced; and
(2) which each produce substantially no net excess steam for export, especially wherein the hydrogen distribution system distributes a purified hydrogen-containing product gas to an industrial gas application, a stationary fuel cell, or to a transportation application,
especially wherein the hydrogen distribution system (12) is a pipeline distribution system,
or wherein the hydrogen distribution system (12) is not a pipeline distribution system.

17. A hydrogen distribution network of one of claims 1 to 8 and 16, wherein the hydrogen distribution system (12) includes a pipeline distribution system and a hydrogen distribution system that is not a pipeline distribution system,
and/or wherein at least one of the hydrogen production modules is a microchannel reformer or HGM hydrogen generation module,
and/or wherein a hydrogen production module and interconnected purification system are integrated and comprise a single process unit.

18. A hydrogen distribution network of one of claims 1 to 8 and 16 and 17, comprising:
wherein
(1) the hydrogen production facilities (1-6) produce minimal or no net excess steam for export and comprise at least one hydrogen production module which may be optionally interconnected to a purification system; and
(2) the at least one hydrogen production module
(a) is configured to receive hydrocarbon feedstock from the hydrocarbon feedstock distribution system (8),
(b) reacts the hydrocarbon feedstock chemically to produce
(i) a hydrogen-containing product gas, and
(ii) minimal or no net excess steam for export;
(c) is configured for optional interconnection to one or more additional hydrogen production modules; and
(d) is configured to export the hydrogen-containing product gas to the hydrogen distribution system (12),
especially wherein the hydrogen distribution system contains a purification system which purifies the hydrogen-containing product gas to yield purified hydrogen-containing product gas,
and/or wherein
(a) the at least one hydrogen production module is configured to export the hydrogen-containing product gas to a purification system contained within the hydrogen production facility; and (b) the purification system is configured to purify the hydrogen-containing product gas and to export purified hydrogen-containing product gas to the hydrogen distribution system,
and/or wherein the hydrogen distribution system contains a purification system.
